Europäisches Patentamt

(19) European Patent Office

Office européen des brevets

(11) Veröffentlichungsnummer : **0 014 209**
**B1**

(12) EUROPÄISCHE PATENTSCHRIFT

(45) Veröffentlichungstag der Patentschrift :
19.05.82

(51) Int. Cl.³ : **F 16 C 32/04**

(21) Anmeldenummer : 79900446.0

(22) Anmeldetag : 25.04.79

(86) Internationale Anmeldenummer :
PCT/DE 79/00047

(87) Internationale Veröffentlichungsnummer :
WO WO/79009 (29.11.79 Gazettee 79/24)

(54) MAGNETISCHE LAGERANORDNUNG.

(30) Priorität : 26.04.78 DE 2818255

(43) Veröffentlichungstag der Anmeldung :
20.08.80 (Patentblatt 80/17)

(45) Bekanntmachung des Hinweises auf die Patenterteilung : 19.05.82 Patentblatt 82/20

(84) Benannte Vertragsstaaten :
FR

(56) Entgegenhaltungen :
FR - A - 2 309 754
US - A - 3 860 300
US - A - 4 065 189

(73) Patentinhaber : TELDIX GmbH
Grenzhöfer Weg 36 Postfach 105608
D-6900 Heidelberg 1 (DE)

(72) Erfinder : WEHDE, Heinz
Landwehrstrasse 30
D-6121 Rothenberg (DE)

(74) Vertreter : Casanova, André et al
Cabinet Casanova et Akerman 23 Boulevard de
Strasbourg
F-75010 Paris (FR)

## Magnetische Lageranordnung

Die Erfindung bezieht sich auf eine aus der DE-A-23 41 766 bekannte magnetische Lageranordnung bestehend aus einem Stator und einem Rotor, zwischen denen sich in axialer Richtung ein ringförmiger Luftspalt erstreckt und die beide in axialer Richtung nebeneinander angeordnete Permanentmagnetringe oder -scheiben zur Erzeugung von abstossenden Lagerkräften aufweisen, wobei zusätzlich zur axialen Stabilisierung auf dem Stator elektrische Ringwicklungen, ein die axiale Lage des Rotors überwachender Sensor und eine Regeleinrichtung vorgesehen sind.

Mit der bekannten Lageranordnung wird aufgrund der im wesentlichen radial gerichteten Magnetisierung der Permanentmagnetringe eine passive Stabilisierung des Rotors in radialer Richtung bewirkt. Hierbei treten jedoch in der zur Magnetisierungsrichtung senkrechten, also in der axialen Richtung destabilisierende Kräfte auf. Daher ist zur Stabilisierung des Rotors in axialer Richtung eine elektromagnetische Regeleinrichtung mit Ringspulen und weiteren Permanentmagnetringen vorgesehen. Es hat sich gezeigt, dass eine derartige Anordnung einen erheblichen Platzbedarf, sowie einen hohen Aufwand an Permanentmagnetringen erfordert. Darüber hinaus bereitet die Herstellung einer derartigen Anordnung Schwierigkeiten, da die Ringwicklungen und Permanentmagnete zur axialen Stabilisierung sehr genau bezüglich der Permanentringe zur radialen Stabilisierung ausgerichtet sein müssen.

Aus der US-A-4 065 189 ist eine magnetische Lageranordnung eines in axialer Richtung schmalen Schwungrads bekannt, bei der auf der Rotorscheibe und den beiden Statorscheiben koaxiale und sich anziehende Permanentmagnetringe gegenüber liegen. Zwischen zwei in radialem Abstand angeordneten Permanentmagnetringen des Stators sind hier zur axialen Stabilisierung des Rotors auf dem Stator je vier Sektorwicklungen vorgesehen.

Der Erfindung liegt die Aufgabe zugrunde, eine magnetische Lageranordnung der eingangs genannten Art zu schaffen, welche einen einfachen Aufbau aufweist und mit einem geringen Aufwand herstellbar ist. Zur Lösung dieser Aufgabe werden die im kennzeichnenden Teil des ersten Patentanspruches angegebenen Merkmale vorgeschlagen.

Die erfindungsgemässe magnetische Lageranordnung zeichnet sich durch einen einfachen Aufbau und durch eine optimale Ausnutzung des vorgesehenen Magnetmaterials, d.h. der Permanentmagnetringe, aus. Es ist von besonderer Bedeutung, dass durch die Integration von Ringwicklungen und Permanentmagnetringen eine in sich geschlossene kompakte Lageranordnung geschaffen ist, welche sowohl die passive Stabilisierung des Rotors in der radialen Richtung als auch die geregelte aktive Stabilisierung in axialer Richtung bewirkt. Da die genannten Ringwicklungen zwischen den statorseitigen Permanentmagnetringen angeordnet sind, wirken die rotorseitigen Permanentmagnetringe gleichzeitig mit Ringwicklungen und statorseitigen Permanentmagnetringen zusammen. Aufgrund der räumlichen Zusammenfassung von Permanentmagnetringen und Ringspulen entfäll daher die separate und aufwendige Montage bzw. Ausrichtung, wie es bei den bekannten Anordnungen erforderlich ist. Nach einer bevorzugten Ausführungsform werden axial magnetisierte Permanentmagnetringe vorgesehen, wobei die axial nebeneinander angeordneten Permanentmagnetringe jeweils entgegengerichtete Magnetisierungsrichtungen aufweisen. Derartige Magnetringe sind sehr einfach herstellbar. In einer vorteilhaften Weiterbildung sind die Ringwicklungen von U-förmigen Ringen aus Weicheisen umgeben, wodurch eine günstige Führung der magnetischen Feldlinien erreicht wird. Besonders vorteilhaft hat sich die Anwendung bei einem langgestreckten Rotor und zwar jeweils im Bereich der Enden des Rotors herausgestellt. Ein derartiger Rotor, welcher insbesondere als Spindel in der Spinnereitechnik oder als Spinnrotor einer Openend-Spinnmaschine ausgebildet ist, rotiert um seine Hauptträgheitsachse, so dass auch die aufzubringenden Lagerkräfte selbst bei einer vorhandenen Unwucht vergleichsweise gering sind. Es werden ferner mechanische Anschläge vorgesehen um zu verhindern, dass der Rotor durch die destabilisierenden Magnetkräfte zu sehr aus einer Sollposition gebracht wird. Die genannten Anschläge dienen auch als Notlager, welche eine Beschädigung bei abgeschalteter Ringwicklung verhindern. Es sei hervorgehoben, dass als Permanentmagnetringe nicht nur geschlossene Ringe verstanden werden, sondern auch Anordnungen aus einzelnen Segmenten.

Vorzugsweise weisen alle Permanentmagnetringe des Stators in axialer Richtung die gleiche Breite auf und sind symmetrisch zu der senkrecht zur Drehachse liegenden Mittenebene der Permanentmagnetringe oder -scheiben des Rotors angeordnet.

Die Permanentmagnetringe werden bevorzugt aus einem ferroplastischen Material hergestellt, bei welchem kleine Partikel mit hartmagnetischen Eigenschaften in einem Kunststoff gleichmäßig verteilt vorhanden sind. Die Erfindung bezieht sich auf Anordnungen bei welchen der Rotor als Innenläufer oder auch als Außenläufer ausgebildet ist.

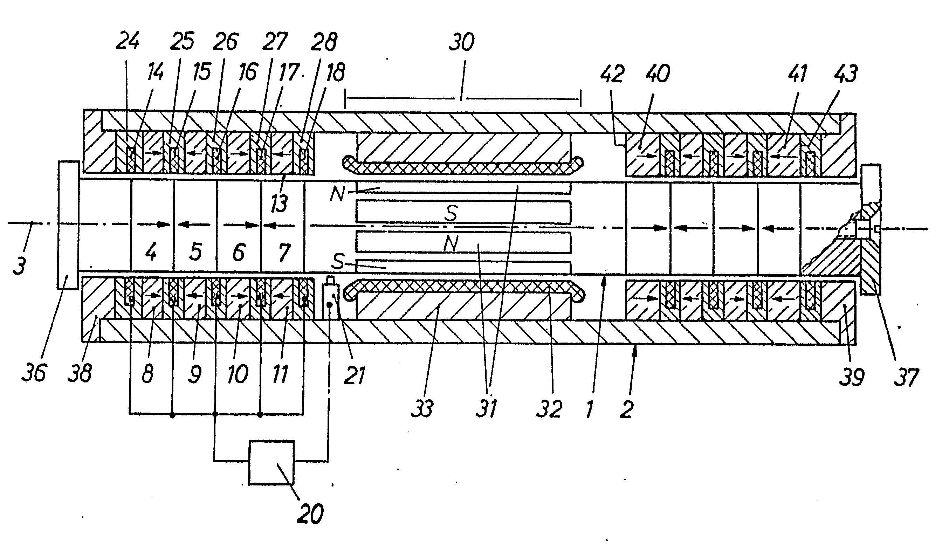

Die Erfindung wird nachfolgend anhand des in der Zeichnung dargestellten Ausführungsbeispiels näher erläutert. Die Prinzipdarstellung zeigt einen langgestreckten Rotor 1, welcher innerhalb eines Stators 2 um eine Achse drehbar angeordnet ist. An beiden Rotorenden sind die einander im wesentlichen entsprechenden magnetische Lageranordnungen vorgesehen, enthaltend auf dem Rotor 1 angeordnete Permanentmagnetringe 4-7. Die Permanentmagnetringe 4-7, welche gegebenenfalls auch als Scheiben ausgebildet sind, sind jeweils in Richtung der Achse 3 magnetisiert, wobei die jeweils nebeneinander liegenden Ringe die entgegengesetzte Magnetisierungsrichtung aufweisen, wie es durch die Pfeile angedeutet ist. Auf dem Stator 2 sind Permanentmagnetringe 8-11 vorgesehen, welche ebenso wie die Ringe des Rotors 1 in axialer Richtung magnetisiert sind, wobei ein axialer ringförmiger Luftspalt 13 vorhanden ist.

In der dargestellten Sollposition des Rotors 1 befinden sich die schmäleren Permanentmagnetringe 8-11 jeweils in der gleichen Radialebene wie die zugehörigen Permanentmagnetringe 4-7, wobei jeweils die Mitten zueinander fluchten. Aufgrund der angegebenen Magnetisierung verlaufen die magnetischen Feldlinien im Luftspalt 13 im Bereich der Berührungsflächen der Permanentmagnetringe 4-7 im wesentlichen in radialer Richtung. Da auch die Permanentmagnetringe 8-11 in gleicher Weise magnetisiert sind, wird der Rotor 1 durch die abstoßenden Magnetkräfte in radialer Richtung passiv stabilisiert. Es ist ersichtlich, daß in axialer Richtung destabilisierende Kräfte auf den Rotor 1 wirksam werden, wenn der Rotor von der Sollposition abweicht. Es sind daher auf dem Stator 2 neben bzw. zwischen den Permanentmagnetringen 8-11 elektrische Ringwicklungen 14-18 vorgesehen, welche über eine bekannte Regeleinrichtung 20 in Abhängigkeit der Abweichung des Rotors 1 aus der Sollposition mit einem Strom beaufschlagt werden. Die Sollposition des Rotors bzw. die Abweichung des Rotors von derselben wird mittels eines Sensors 21 erfaßt. Wird der Rotor 1 aufgrund von äußeren Kräften beispielsweise in der Zeichnung nach rechts von der Sollposition abgelenkt, so werden infolge eines Signals des Sensors 21 über die Regeleinrichtung 20 die Ringwicklungen 14-18 derart vom Strom durchflossen, daß im Zusammenwirken mit den Permanentmagnetringen 4-7 eine in Richtung der Drehachse 3 nach links wirkende Kraftkomponente auf den Rotor einwirkt bis der Rotor 1 wieder die Sollposition einnimmt. Es hat sich gezeigt, daß nur eine sehr geringe elektrische Leistungsaufnahme erforderlich ist, um den Rotor 1 in der Sollposition zu halten.

Die Ringwicklungen 14-18 sind bevorzugt in U-förmigen Ringen 24-28 aus Weicheisen angeordnet, welche zum Luftspalt 13 bzw. zum Rotor 1 geöffnet sind. Somit werden in vorteilhafter Weise die magnetischen Flüsse der Permanentmagnetringe bzw. der Ringwicklungen geführt bzw. die magnetischen Widerstände der magnetischen Kreise verringert.

Wie oben bereits angegeben, ist am anderen Rotorende eine entsprechende Lageranordnung vorgesehen. In der Mitte ist ein elektrischer Antriebsmotor 30 vorgesehen enthaltend auf dem Rotorumfang eine Anzahl radial magnetisierter Permanentmagnete 31 mit in Umfangsrichtung wechselnden Polaritäten. Auf dem Stator 2 ist eine mehrphasige Antriebswicklung 32 vorgesehen, welche in einen eisenfreien Statorkörper 33 eingelegt ist. Ein solcher eisenloser Antriebsmotor 30 ist in Verbindung mit der beschriebenen magnetischen Lageranordnung von besonderem Vorteil, da außer dem erforderlichen Antriebsdrehmoment praktisch keine weiteren Kräfte auf den Rotor 1 enwirken, welche anderenfalls auch noch von der magnetischen Lageranordnung aufgenommen werden müßten.

Damit der Rotor 1, insbesondere in axialer Richtung nicht zu weit aus der Sollposition ausgelenkt werden kann, weist der Rotor an den Enden einen Flansch 36 und eine abnehmbare Scheibe 37 auf. Diesen sind auf dem Stator 2 unter Bildung von kleinen Ringspalten Ringe 38, 39 zugeordnet, so daß durch die derart ausgebildeten Anschläge die Bewegungen des Rotors 1 begrenzt werden. Anstelle des Flansches 36 wird in einer bevorzugten Ausführungsform der Spinnrotor einer Openend-Spinnmaschine gesehen. Für die Ringe 38, 39 ist ein Werkstoff mit guten Gleiteigenschaften, wie z.B. Teflon vorgesehen, so daß eine zuverlässige Notlagerung des Rotors 1 geschaffen ist und Beschädigungen selbst dann vermieden werden, wenn infolge von Störungen oder bei der Inbetriebnahme in den Wicklungen 14-18 kein Strom fließt. Derartige Anschläge können gegebenenfalls auch nur an einem Rotorende vorgesehen werden, wobei durch entsprechende Ausbildung Rotorbewegungen in beiden Richtungen begrenzt werden.

Die Lageranordnung an dem rechten Rotorende der Zeichnung entspricht im wesentlichen der oben ausführlich beschriebenen, so daß nachfolgend nur die Unterschiede erläutert werden. Die beiden äußeren Permanentmagnetringe 40, 41 sind in axialer Richtung stärker ausgeführt und zwar derart, daß die äußeren Stirnflächen 42, 43 jeweils in der gleichen Radialebene liegen wie die der zugeordneten Permanentmagnetringe des Rotors 1. Auf diese Weise wird das Magnetvolumen erhöht und ein günstiger Feldverlauf in dem genannten Bereich erhalten.

Das anhand der Zeichnung erläuterte Ausführungsbeispiel enthält zwei magnetische Lageranordnungen an den beiden Enden eines langgestreckten Rotors, wobei jeweils ein axialer ringförmiger Luftspalt vorhanden ist. Es ist hervorgehoben, daß die Erfindung nicht auf eine derartige Anordnung beschränkt ist, sondern daß bei einem entsprechend ausgebildeten Rotor auch eine einzige derartige Lageranordnung vorgesehen sein kann. Ferner betrifft die Erfindung Anordnungen mit jeweils nur einem Permanentmagneten auf dem Stator bzw. Rotor. Entscheidend ist aber, daß zusätzlich noch wenigstens eine elektrische Wicklung insbesondere auf dem Stator vorgesehen ist, um zusammen mit dem anderen Permanentmagneten eine im wesentlichen in axialer Richtung wirkende und regelbare Kraftkomponente auf den Rotor zu erzeugen.

## Ansprüche

1. Magnetische Lageranordnung, bestehend aus einem Stator (2) und einem Rotor (1), zwischen denen sich in axialer Richtung ein ringförmiger Luftspalt (13) erstreckt und die beide in axialer Richtung nebeneinander angeordnete Permanentmagnetringe oder -scheiben (4-7 ; 8-11) zur Erzeugung von abstossender Lagerkräften zur radialen Stabilisierung aufweisen, wobei zusätzlich zur axialen Stabilisierung des Rotors im Stator (2) elektrische Ringwicklungen (14-18), ein die axiale Lage des Rotors (1) überwachender Sensor (21) und eine Regeleinrichtung (20) vorgesehen sind, dadurch gekennzeichnet, dass die Ringwicklungen (14-18) und die Permanentmagnete (8-11) des Stators in axialer Richtung in wechselnder Reihenfolge angeordnet sind.

2. Magnetische Lageranordnung nach Anspruch 1, dadurch gekennzeichnet, dass an den Enden der Lageranordnung Ringwicklungen angeordnet sind.

3. Magnetische Lageranordnung nach Anspruch 1 oder 2, dadurch gekennzeichnet, dass die Permanentmagnetringe oder -scheiben (4-7 ; 8-11) jewells in Richtung der Drehachse (3) magnetisiert sind, wobei die einander zugeordneten Permanentmagnete vom Rotor (1) und Stator (2) die gleiche Magnetisierungsrichtung aufweisen.

4. Magnetische lagerordnung nach einem der Ansprüche 1-3, dadurch gekennzeichnet, dass die Wicklungen (14-18) von Ringen (24-28) aus weichmagnetischem Material umgeben sind, welche ein zum Rotor (1) offenes U-Profil aufweisen.

5. Magnetische Lageranordnung nach einem der Ansprüche 1-4, gekennzeichnet durch die Anwendung bei einem langgestreckten Rotor (1), welcher mit hohen Drehzahlen läuft, wobei jeweils im Bereich der Enden des Rotors (1) eine derartige Lageranordnung vorgesehen ist.

6. Magnetische Lageranordnung nach einem der Ansprüche 1-5, dadurch gekennzeichnet, dass alle Permanentmagnetringe (8-11) des Stators (2) in axialer Richtung die gleiche Breite aufweisen und symmetrisch zu der senkrecht zur Drehachse liegenden Mittenebene der Permanetmagnetringe oder -scheiben (4-7) des Rotors (1) angeordnet sind.

7. Magnetische Lageranordnung nach einem der Ansprüche 1-6, dadurch gekennzeichnet, dass der Rotor (1) Anschläge bzw. Scheiben (36, 37) aufweist, welche mit Ringen (38, 39) des Stators (2) als Notlager in axialer Richtung dienen.

8. Magnetische Lageranordnung nach einem der vorhergehenden Ansprüche, dadurch gekennzeichnet, dass die Permanentmagnetringe oder -scheiben (4-11) aus Ferroplast bestehen.

## Claims

1. Magnetic bearing arrangement, consisting of a stator (2) and a rotor (1) between which an annular air gap (13) extends in axial direction and which both have permanent magnet rings or discs (4-7 ; 8-11) arranged adjacent to one another in axial direction for the production of repelling bearing forces for radial stabilisation, wherein, for the axial stabilisation of the rotor, there are additionnally provided, in the stator (2), electrical ring windings (14-18), a sensor (21) monitoring the axial position of the rotor (1) and a control device (20), characterised in that the ring windings (14-18) and the permanent magnets (8-11) of the stator are arranged in axial direction in alternating sequence.

2. Magnetic bearing arrangement according to claim 1, characterised in that ring windings are arranged at the ends of the bearing arrangement.

3. Magnetic bearing arrangement according to claim 1 or 2, characterised in that each of the permanent magnet rings or discs (4-7 ; 8-11) are magnetised in the direction of the axis of rotation (3), each of the permanent magnets of the rotor (1) having the same direction of magnetisation as the associated permanent magnet of the stator (2).

4. Magnetic bearing arrangement according to one of claims 1 to 3, characterised in that the windings (14-18) are surrounded by rings (24-28) of soft magnetic material having a U-profile which is open in the direction of the rotor (1).

5. Magnetic bearing arrangement according to one of claims 1 to 4, characterised by use in a longitudinally extended high-speed rotor (1), such a bearing arrangement being provided in the region of each end of the rotor (1).

6. Magnetic bearing arrangement according to one of claims 1 to 5, characterised in that all of the permanent magnet rings (8-11) of the stator (2) have the same width in axial direction and are arranged symmetrically to that central plane of the permanent magnet rings or discs (4-7) of the rotor (1) that lies perpendicular to the axis of rotation.

7. Magnetic bearing arrangement according to one of claims 1 to 6, characterised in that the rotor (1) has stops or discs (36, 37) which serve in conjunction with rings (38, 39) of the stator (2) as emergency bearings in axial direction.

8. Magnetic bearing arrangement according to one of the preceding claims, characterised in that the permanent magnet rings or discs (4-11) consist of ferroplastics.

## Revendications

1. Palier magnétique du genre comprenant un stator et un rotor entre lesquels s'étend en direction radiale un entrefer annulaire et qui comportent chacun des aimants permanents en forme d'anneaux ou de disques montés les uns à côté des autres en direction axiale pour engendrer des forces de répulsion assurant la stabilisation radiale, ce dispositif comprenant en outre des enroulements électriques annulaires dans le rotor pour assurer la stabilisation axiale de ce dernier, ainsi qu'un capteur déterminant la position axiale du rotor et un dispositif d'asservissement, ledit palier étant caractérisé en ce que les enroulements annulaires (14 à 18) et les aimants permanents (8 à 11) du stator se succèdent en alternance en direction axiale.

2. Palier magnétique selon la revendication 1, caractérisé en ce que des enroulements annulaires sont montés aux extrémités du palier.

3. Palier magnétique selon l'une quelconque des revendications 1 et 2, caractérisé en ce que les aimants permanents en forme d'anneaux ou de disques (4 à 7, 8 à 11) sont tous magnétisés dans la direction de l'axe de rotation (3), les aimants permanents en regard du rotor (1) et du stator (2) présentant le même sens de magnétisation.

4. Palier magnétique selon l'une quelconque des revendications 1 à 3, caractérisé en ce que les enroulements (14 à 18) sont entourés d'anneaux (24 à 28) en matériau magnétique qui présentent un profil en U ouvert vers le rotor (1).

5. Palier magnétique selon l'une quelconque des revendications 1 à 4, caractérisé par l'utilisation d'un rotor allongé (1) qui tourne à des vitesses de rotation élevées, un palier étant prévu à chaque extrémité de ce rotor (1).

6. Palier magnétique selon l'une quelconque des revendications 1 à 5, caractérisé en ce que les aimants permanents annulaires (8 à 11) du stator (2) présentent tous la même largeur en direction axiale et sont disposés de manière symétrique par rapport aux plans médians, perpendiculaires à l'axe de rotation, des aimants permanents en forme d'anneaux ou de disques (4 à 7) du rotor (1).

7. Palier magnétique selon l'une quelconque des revendications 1 à 6, caractérisé en ce que le rotor (1) comporte des butées ou des disques (36, 37) qui coopèrent avec des anneaux (38, 39) montés dans le stator (2) pour servir de paliers de secours en direction axiale.

8. Palier magnétique selon l'une quelconque des revendications 1 à 7, caractérisé en ce que les aimants permanents en forme d'anneaux ou de disques (4 à 11) sont réalisés en un matériau ferro-plastique.